# EUROPÄISCHE PATENTSCHRIFT

(11) **EP 2 463 581 B1**
(45) Veröffentlichungstag und Bekanntmachung des Hinweises auf die Patenterteilung: **21.01.2015**
(21) Anmeldenummer: 10194744.8
(22) Anmeldetag: 13.12.2010
(51) Int. Cl.: B01D 46/42, F23J 15/02

(54) **Reinigungsanordnung für Filterungsanordnung für das Abgas einer Feuerstätte**
Filter cleaning device for exhaust gas treatment of a fire place
Dispositif de nettoyage d'un filtre pour la purification des gaz d'échappement d'un site de combustion

(43) Veröffentlichungstag der Anmeldung: 13.06.2012
(73) Patentinhaber: Kutzner + Weber GmbH, 82216 Maisach (DE)
(72) Erfinder: Manfred, Pabst, 56329 St. Goar (DE); Ebel, Matthias, 80796 München (DE)
(74) Vertreter: Tiesmeyer, Johannes

(56) Entgegenhaltungen:
- EP-A1- 2 166 286
- DE-A1- 19 627 028
- DE-A1- 19 824 204

## Beschreibung

Die vorliegende Erfindung betrifft eine Filterungsanordnung für eine Abgasanlage einer Feuerstätte, insbesondere Festbrennstoff-Feuerstätte. Der Begriff Abgasanlage wird in der vorliegenden Anmeldung auch als Synonym für Kamin, insbesondere auch für Schornsteine und Abgasleitungen verwendet.

Es ist allgemein bekannt, dass bei der Feuerung in Feuerungsanlagen, wie z.B. Öfen, Brennern usw., durch unvollständige Verbrennung Rußpartikel entstehen. Dies gilt insbesondere bei der Verfeuerung von Festbrennstoffen wie Holz, Brennstoffpellets u. dgl. Während für die feinen Rußpartikel (Feinstaub), aufgrund der von ihnen ausgehenden Gesundheitsgefahr, Abscheidevorrichtungen in den Abgas abführenden Leitungen vorgesehen sind, werden meist gegen die makroskopischen Rußpartikel keine weiteren Maßnahmen ergriffen, so dass diese entweder über den an der Feuerstätte angeschlossenen Kamin ins Freie gelangen oder sich auf den Kamininnenwänden absetzen. Darüber hinaus bilden die abgeschiedenen feinen Rußpartikel an der Abscheidevorrichtung ebenfalls makroskopische Rußpartikel, die ebenfalls ins Freie gelangen oder sich innerhalb des Kamins ablagern können. Die Rußpartikelabscheidungen beeinträchtigen einerseits die Abgasabzugswirkung des Kamins und können andererseits sogar einen Kaminbrand auslösen, so dass diese Ablagerungen regelmäßig zu entfernen sind.

Um ein Gelangen der Rußpartikel ins Freie, beziehungsweise ein Anhaften der Rußpartikel an den Kaminwänden zu verhindern, werden bekannterweise Filterelemente in die Abgasleitung eingesetzt. Das durch die Abscheidevorrichtung passierende Abgas durchströmt das Filterelement, bevor es durch die Abgasleitung ins Freie gelangt. Die makroskopischen Rußpartikel werden insbesondere an einer abgaseinlassseitigen Fläche des Filters abgefangen. Ein derartigen Filteranordnungen inhärentes Problem besteht darin, dass die makroskopischen Rußpartikel das Filterelement blockieren. Insbesondere bei Verwendung eines elektrostatischen Feinstaubfilters als Abscheidevorrichtung bilden sich infolge der elektrostatischen Beladung durch das Feinstaubfilter Konglomerate von Rußpartikeln, die an der abgaseinlassseitigen Fläche des Filters anhaften können. Dadurch wird wiederum die Abgasabzugswirkung der Abgasanlage beeinträchtigt.

Dieses Problem kann durch ein regelmäßiges Austauschen und Reinigen der Filterelemente umgangen werden. Bekannterweise werden die Filterelemente ausgebaut, um die daran anhaftenden Rußpartikel zu entfernen. Dies ist zum Teil sehr aufwändig und auch mit längerer Unterbrechung der Betriebszeit verbunden.

EP 2 166 286 A1 offenbart eine Filteranlage für Feuerungsstätten mit einem Filterelement und einer zugeordneten Funkenquelle, welche dazu aktivierbar ist, die an der abgaseinlassseitigen Filterfläche anhaftenden Rußpartikel durch Abbrand als Folge der Funkenerzeugung automatisch zu entfernen.

Es ist daher Aufgabe der vorliegenden Erfindung, eine Filterungsanordnung für eine Abgasanlage vorzusehen, die einen Langzeitbetrieb der Abgasanlage und der daran angeschlossenen Feuerstätte ermöglicht, ohne das Filterelement der Filterungsanordnung austauschen oder ausbauen zu müssen.

Erfindungsgemäß wird diese Aufgabe gelöst durch eine Filterungsanordung für eine Abgasanlage einer Feuerstätte, insbesondere Festbrennstoff-Feuerstätte, umfassend ein in die Abgasanlage zu integrierendes oder integriertes Gehäuse mit wenigstens einem Abgaseinlass und wenigstens einem Abgasauslass, ein Filterelement, welches zwischen dem wenigstens einem Abgaseinlass und dem wenigstens einem Abgasauslass in dem Gehäuse angeordnet ist und eine abgaseinlassseitige Filterfläche aufweist, die dazu ausgebildet ist, Rußpartikel oder dergleichen aus dem Abgas zu filtern, welches das Gehäuse im bestimmungsgemäßen Betrieb in der Abgasanlage durchströmt, und eine dem Filterelement zugeordnete Reinigungsvorrichtung in oder an dem Gehäuse, welche dazu aktivierbar ist, die an der abgaseinlassseitigen Filterfläche anhaftenden Rußpartikel oder dergleichen automatisch zu entfernen. Bei einer derartigen Filterungsanordnung mit zugeordneter Reinigungsvorrichtung werden an dem Filterelement anhaftende Rußpartikel automatisch entfernt ohne ein Ausbauen des Filterelements oder ein Zugang zu der Filterungsanordnung von Außerhalb des Gehäuses zu erfordern.

Um ein Abführen der von der Filterfläche entfernten Rußpartikel aus dem Gehäuse zu ermöglichen, kann der Aufbau derart sein, dass eine Behältervorrichtung zur Aufnahme von Rußpartikeln vorgesehen ist. Überdies kann in einer bevorzugten Ausführungsform daran gedacht werden, dass das Gehäuse ferner einen Absaugkanal umfasst, an den eine Absaugvorrichtung zum Absaugen von Rußpartikeln angeschlossen ist, wodurch die entstandenen Reinigungsrückstände in besonders einfacher und sauberer Weise aus dem Kamin entnommen werden können. Dabei kann die Absaugvorrichtung sowohl zusammen mit der Reinigungsvorrichtung betrieben werden oder erst nach Beendigung des Reinigungsvorgangs eingeschaltet werden.

In einer bevorzugten Ausgestaltungsform ist das Filterelement im Wesentlichen zylinderförmig und weist ferner einen zylinderförmigen perforierten Filtermantel auf, welcher Filtermaterial enthält.

Vorzugsweise kann das Filterelement als Filtermaterialien Edelstahlspähne, Edelstahlwolle, poröse Keramik, insbesondere Schaumkeramik, Granulate, insbesondere Blähtongranulat, und/oder Bimsstein umfassen.

Das Filterelement ist vorzugsweise um eine Drehachse gelagert. Um ein Drehen des Filterelements zu bewirken, umfasst die Filterungsanordnung ferner eine Antriebsvorrichtung.

Für eine effiziente Reinigung des Filterelements ist eine Abstreifvorrichtung als Teil der Reinigungsvorrichtung vorgesehen, die dazu eingerichtet ist, die abgaseinlassseitige Filterfläche des Filterelements zu beaufschlagen, um Rußpartikel oder dergleichen davon abzustreifen. Dabei kann die Abstreifvorrichtung in Form einer Bürstenanordnung mit mindestens einer Bürste ausgebildet sein. Die Bürste kann sich über die gesamte Länge des Filterelements erstrecken, oder aber auch als eine entlang der Längsseite des Filterelements bewegliche Bürste ausgebildet sein. Im ersten Fall ist die Länge der Bürste im Wesentlichen gleich der Länge des Filterelements, wohingegen im zweiten Fall die Bürste kürzer als das Filterelement ist.

Abstreifvorrichtungen gemäß der vorliegenden Erfindung realisieren eine mechanische Reinigung der abgaseinlassseitigen Filterfläche des Filterelements. Dabei wird die Außenoberfläche des Filterelements abgestreift.

Die durch elektrostatische Beladung der Rußpartikel entstehende Konglomerate, die möglicherweise eine klebrige Beschaffenheit aufweisen können, können zum Teil durch die Perforationen des Filtermantels hindurchtreten und lassen sich daher durch einen reinen mechanischen Abstreifungsvorgang nicht von der Filterfläche entfernen. Daher kann in einer weiteren bevorzugten Ausgestaltungsform der vorliegenden Erfindung vorgesehen sein, dass die Reinigungsvorrichtung wenigstens eine der abgaseinlassseitigen Filterfläche gegenüberliegend angeordnete und zum Aufsprühen einer Flüssigkeit auf diese Filterfläche eingerichtete Sprühvorrichtung umfasst, wobei die Flüssigkeit an der abgaseinlassseitigen Filterfläche anhaftende Rußpartikel oder dergleichen chemisch entfernen oder lockern kann.

Besonders vorteilhaft erweist sich als Sprühflüssigkeit eine Flüssigkeit, die bei einer Temperatur kleiner als die Entzündungstemperatur von Rußpartikeln, insbesondere bei einer Temperatur kleiner 400°C, entzündlich ist. Die auf das Filterelement aufgesprühte Flüssigkeit entzündet sich bei entsprechend hoher Abgastemperatur im Gehäuse der Filteranordnung, so dass es dann auch zur Verbrennung der an der Filterfläche anhaftenden Rußpartikel kommt. Die dabei möglicherweise entstehenden Rückstände können in einer bevorzugten Variante der Erfindung mittels einer Absaugvorrichtung aus dem Gehäuse entfernt werden.

Die Filterungsanordnung umfasst vorzugsweise eine Steuereinrichtung zur Aktivierung der Reinigungsvorrichtung, welche dazu eingerichtet ist, die Reinigungsvorrichtung jeweils nach vorbestimmten Zeitabständen und/oder in Abhängigkeit vom Verschmutzungsgrad des Filterelementes zu aktivieren. Dabei kann es sich beispielsweise um einen elektrischen Schalter oder eine Zeituhr handeln, welche in vorgegebenen Zeitintervallen die Reinigung des Filterelements veranlassen kann. Dabei kann die Reinigungsvorrichtung mittels einer Antriebsvorrichtung angetrieben werden, insbesondere mittels einer elektrisch betriebenen Vorrichtung, die in einfacher Weise durch die Steuereinrichtung steuerbar ist.

Der Aufbau der Steuereinrichtung kann auch derart sein, dass die Steuereinrichtung dazu ausgestaltet ist, nach Maßgabe vorgegebener oder ermittelter Parameter die Bewegung der Reinigungseinheit an der Filterfläche selbsttätig zu steuern. Hierbei kann eine programmierbare, auf einem Mikrocontroller basierende Steuereinrichtung vorgesehen sein, die in bestimmten, vorgegebenen Zeitintervallen selbsttätig einen Reinigungsvorgang veranlassen kann. Zusätzlich kann nach Maßgabe zusätzlicher an die Steuereinrichtung übermittelter Informationen die Bewegung der Reinigungsvorrichtung gesteuert werden.

Hierbei kann in einer bevorzugten Ausgestaltungsform vorgesehen sein, dass wenigstens eine Sensoreinrichtung vorgesehen ist, die dazu eingerichtet ist zum Steuern der Bewegung der Reinigungvorrichtung innerhalb des Gehäuses relevante Parameter für die Steuerungseinrichtung bereitzustellen. Derartige Sensoreinrichtungen können beispielsweise Drucksensoren und/oder Strömungssensoren sein. In Frage kommen auch Temperatur- oder Rauchsensoren, die einen Temperaturanstieg beziehungsweise eine vermehrte Abgasentwicklung erkennen, die möglicherweise auf ein verstopftes Filterelement hinweisen. Derartige Sensoren können in der Abgasleitung und/oder im Gehäuse der Filterungsanordnung vorgesehen sein.

Gegenstand der Erfindung ist auch eine Abgasanlage für eine Feuerstätte, insbesondere Festbrennstoff-Feuerstätte, mit einer in einem Abgasweg integrierten Filterungsanordnung, wie weiter oben beschrieben.

Die erfindungsgemäße Filterungsanordnung wird dadurch automatisch gereinigt, dass die Reinigungsvorrichtung mit der abgaseinlassseitigen Filterfläche des Filterements in Kontakt gebracht wird und das Filterelement beim Aufrechterhalten des Kontaktes zwischen der Abstreifvorrichtung der Reinigungsvorrichtung und der Filterfläche des Filterelements gedreht wird, wodurch die an der abgaseinlassseitigen Filterfläche anhaftenden Rußpartikel abgestreift werden. Dabei kann die Reinigungsvorrichtung z.B. in bestimmten Zeitabständen eingeschaltet werden. Dies kann während des Feuerungsbetriebs der Feuerstätte und/oder außerhalb des Feuerungsbetriebs erfolgen.

Die Filterungsanordnung kann aber auch an einen Betrieb der Feuerstätte gekoppelt sein, derart dass, wenn die Feuerstätte in Betrieb ist, die Reinigungsvorrichtung die abgaseinlasssseitige Filterfläche beaufschlagt und das Filterelement langsam gedreht wird. Dabei kann die Drehgeschwindigkeit des Filterelements in Abhängigkeit des Verschmutzungsgrades des Filterelements verändert werden.

Im Falle einer Reinigungsvorrichtung mit eingebauter Sprühvorrichtung kann die Menge der einzusprühenden Flüssigkeit sowie die Dauer des Sprühvorgangs ebenfalls in Abhängigkeit des Verschmutzungsgrads des Filterelements eingestellt werden.

Die Erfindung wird nachfolgend unter Bezugnahme auf die anliegenden Figuren näher beschrieben. Es zeigen:
- Fig. 1: eine schematische Darstellung einer Filterungsanordnung nach der Erfindung mit einer Reinigungsvorrichtung und einer Antriebsvorrichtung;
- Fig. 2: eine Feuerstätte mit einer Abgasanlage und einer darin installierten Filterungsanordnung gemäß Fig. 1.

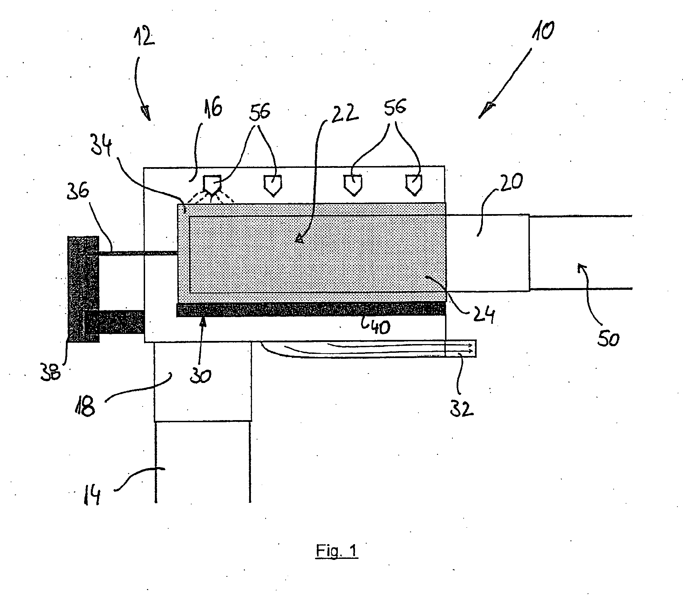

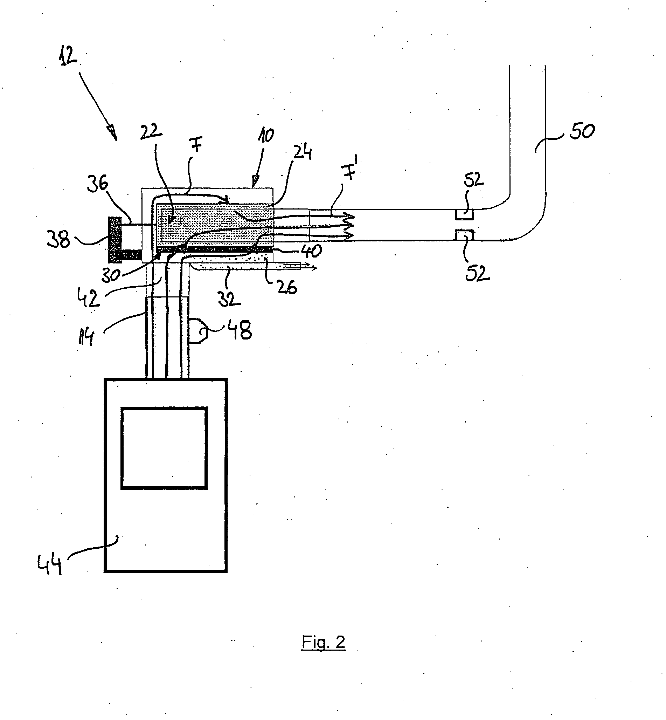

Fig. 1 stellt eine allgemein mit 10 bezeichnete Filterungsanordnung dar, welche in einer Abgasleitung 50 einer Abgasanlage 12 angeordnet ist. Die Filterungsanordnung 10 umfasst ein in die Abgasanlage 12 integriertes Gehäuse 16, welches einen Abgaseinlass 18 und einen Abgasauslass 20 aufweist. Der Abgaseinlass 18 ist mit dem Abgasrohr 14 eines Verbrennungsofens 44 (Fig. 2) verbunden. In dem Gehäuse 16 befindet sich ein Filterelement 22. Das Filterelement 22 der vorliegenden Ausführungsform ist im Wesentlichen zylinderförmig und weist einen perforierten äußeren Filtermantel 34 und einen darin koaxial angeordneten (nicht gezeigten) inneren perforierten Mantel auf. Das Filterelement 22 enthält zwischen den Mänteln Filtermaterial, wie beispielsweise Edelstahlspähne, Edelstahlwolle, poröse Keramik, Schaumkeramik, Granulate, Blähtongranulat oder/und Bimsstein (in der Figur nicht dargestellt). Das Filterelement 22 ist drehbar um eine Drehachse 36 gelagert. Eine Antriebsvorrichtung 38 bewirkt ein Drehen des Filterelements 22. In dieser Ausführungsform befindet sich die Antriebsvorrichtung 38 außerhalb des Gehäuses 16. Das Filterelement 22 dient dazu, Rußpartikel 26 aus dem Abgas zu filtern, welches während des Betriebs der Abgasanlage 12 durch den Abgaseinlass 18 in das Gehäuse 16 gelangt. In der vorliegenden Ausführungsform erstreckt sich die abgaseinlassseitige Filterfläche 24 über den gesamten äußeren Mantel 34 des Filterelements 22.

Eine Reinigungsvorrichtung 30 ist in dem Gehäuse 16 der abgaseinlassseitigen Filterfläche 24 des Filterelements 22 gegenüberliegend angeordnet. Die Reinigungsvorrichtung 30 kann das Filterelement 22 beaufschlagen, um Rußpartikel oder dergleichen, welche beim Strömen des Abgases durch das Filterelement 22, an dessen Außenmantel 34 haften bleiben, zu entfernen. Durch Drehen des Filterelements 22 mittels der Antriebsvorrichtung 38 bei gleichzeitiger Beaufschlagung der abgaseinlassseitigen Filterfläche 24 durch die Reinigungsvorrichtung 30 wird ein Entfernen der an der abgaseinlassseitigen Filterfläche 24 anhaftenden Rußpartikel 26 bewirkt. Die abgestreiften Rußpartikel 26 fallen auf den Boden des Gehäuses 16, von wo aus diese durch einen Absaugkanal 32 mittels einer daran angeschlossenen Absaugvorrichtung (nicht gezeigt) aus dem Gehäuse entfernt werden können.

Fig. 2 zeigt schematisch eine Feuerstätte 44 mit einer daran angeschlossenen Abgasanlage 12. Die Feuerstätte 44 ist ein Verbrennungsofen, der über ein Abgasrohr 14 mit der Abgasanlage 12 verbunden ist. Zum Auffangen der bei der Verbrennung entstehenden feinen Rußpartikel (Feinstaub) ist in dem Abgasrohr 14 eine Abscheidevorrichtung 48 vorgesehen. Die Abscheidevorrichtung 48 weist vorzugsweise ein elektrostatisches Feinstaubfilter auf, welches durch elektrische Aufladung feine Rußpartikel binden kann. In der Abgasanlage 12 befindet sich eine erfindungsgemäße Filterungsanordnung 10. Beim Betrieb des Verbrennungsofens 44 durchströmt das bei der Verbrennung entstehende Abgas das Gehäuse 16 der Filterungsanordnung 10, welche die durch die Abscheidevorrichtung 48 gebildeten Rußpartikel 26 abfängt. Das Abgas tritt durch den Abgaseinlass 18 in das Gehäuse 16 hinein, tritt weiterhin durch die abgaseinlassseitige Filterfläche 24 des Filterelements 22 in das Filterelement hinein, wird im Filterelement 22 durch die darin enthaltenen Filtermaterialien gereinigt, und tritt durch den Abgasauslass 20 aus der Filterungsanordnung 10 aus. Dieser Abgasweg 42 ist in der Figur 2 durch Pfeile F, F' dargestellt, wobei die Pfeile F den Abgasweg darstellen, bevor das Abgas in das Filterelement 22 gelangt, wohingegen die Pfeile F' den Weg des gefilterten Abgases aus dem Filterelement 22 und weiterhin durch die Abgasleitung 50 darstellen.

Um den Feuerungszustand der Feuerstätte 44 zu überwachen, sind in der Abgasleitung 50 Sensoreinrichtungen 52, z.B. Strömungssensoren oder Drucksensoren, vorgesehen. Diese Sensoren sind mit einer nicht dargestellten Steuereinrichtung zur Aktivierung der Reinigungsvorrichtung 30 verbunden, so dass, wenn ein erhöhter Strömungswiderstand in der Abgasanlage 12 durch die Sensoren 52 erfasst wird, die Reinigungsvorrichtung 30 automatisch gestartet wird. Alternativ kann die Reinigungsvorrichtung auch manuell von außerhalb des Gehäuses 16 gestartet werden, wie beispielsweise durch Knopfdruck durch einen Operator. Die Reinigungsvorrichtung 30 wird mittels der Antriebsvorrichtung 38 betrieben.

Bei der dargestellten erfindungsgemäßen Ausführungsform umfasst die Reinigungsvorrichtung 30 eine Abstreifvorrichtung 40, welche, wenn sie in Kontakt mit der abgaseinlassseitigen Filterfläche 24 des Filterelements 22 steht, Rußpartikel 26 von dieser abstreift. Zusätzlich dazu kann die Filterunganordung 12 in Fig. 1 eine stark schematisiert dargestellte Sprühvorrichtung 56 umfassen, mit welcher eine Flüssigkeit auf die abgaseinlassseitige Filterfläche 24 des Filterelements 22 aufgesprüht werden kann, wodurch Rußpartikel, die an der abgaseinlassseitigen Filterfläche 24 des Filterelements 22 anhaften, chemisch entfernt oder gelockert werden können. Dabei kann die Sprühvorrichtung 56 in ihrer Gesamtheit in dem Gehäuse 16 angeordnet sein, oder derart an dem Gehäuse 16 angebracht sein, dass nur betreffende Sprühdüsen innerhalb des Gehäuses 16 liegen.

Bei dem dargestellten Ausführungsbeispiel ist die Reinigungsvorrichtung 30 dem Filterelement 22 derart zugeordnet, dass während des Reinigungsvorgangs die Reinigungsvorrichtung 30 an dem Filterelement 22 statisch anliegt. Die Reinigung des Filterelements 22 erfolgt durch ein Drehen des Filterelements um die Drehachse 36 bei gleichzeitiger Beaufschlagung der abgaseinlassseitigen Filterfläche 24 durch die Abstreifvorrichtung 40 der Reinigungsvorrichtung 30. Ggf. kann auch eine Sprühvorrichtung 56 zum Einsatz kommen.

Gemäß nicht gezeigter Varianten der Erfindung kann das Filterelement unbeweglich und die Reinigungsvorrichtung der erfindungsgemäßen Filterungsanordung relativ dazu bewegbar sein. Dabei kann das Filterelement zylinderförmig sein. Jedoch lassen sich entsprechend derartiger Varianten der Erfindung auch Filterelemente anderer Gestaltungsformen, wie beispielsweise flache, rechteckige Filterelemente in der Filterungsanordung einsetzen.

## Patentansprüche

1. Filterungsanordnung (10) für eine Abgasanlage (12) einer Feuerstätte, insbesondere Festbrennstoff-Feuerstätte, umfassend:
ein in die Abgasanlage (12) zu integrierendes oder integriertes Gehäuse (16) mit wenigstens einem Abgaseinlass (18) und wenigstens einem Abgasauslass (20);
ein Filterelement (22), welches zwischen dem wenigstens einem Abgaseinlass (18) und dem wenigstens einem Abgasauslass (20) in dem Gehäuse (16) angeordnet ist und eine abgaseinlassseitige Filterfläche (24) aufweist, die dazu ausgebildet ist, Rußpartikel (26) oder dergleichen aus dem Abgas zu filtern, welches das Gehäuse (16) im bestimmungsgemäßen Betrieb in der Abgasanlage (12) durchströmt, und
eine dem Filterelement (22) zugeordnete Reinigungsvorrichtung (30) in oder an dem Gehäuse (16), welche dazu aktivierbar ist, die an der abgaseinlassseitigen Filterfläche (24) anhaftenden Rußpartikel (26) oder
dergleichen automatisch zu entfernen,
**dadurch gekennzeichnet, dass** die Reinigungsvorrichtung (30) eine Abstreifvorrichtung (40) umfasst, die dazu eingerichtet ist, die abgaseinlassseitige Filterfläche (24) des Filterelementes (22) zu beaufschlagen,
um Rußpartikel (26) oder dergleichen davon abzustreifen.

2. Filterungsanordnung (10), nach Anspruch 1,
wobei das Gehäuse (16) ferner einen Absaugkanal (32) und eine daran anschließbare Absaugvorrichtung umfasst.

3. Filterungsanordnung (10) nach Anspruch 2,
wobei das Filterelement (22) im Wesentlichen zylinderförmig ist.

4. Filterungsanordnung (10) nach Anspruch 3,
wobei das Filterelement (22) einen zylinderförmigen perforierten Filtermantel (34) aufweist, welcher Filtermaterial enthält.

5. Filterungsanordnung (10) nach einem der vorhergehenden Ansprüche, wobei das Filterelement (22) als Filtermaterialien Edelstahlspähne, Edelstahlwolle, poröse Keramik, insbesondere Schaumkeramik, Granulate, insbesondere Blähtongranulat, und/oder Bimsstein umfasst.

6. Filterungsanordnung (10) nach einem der vorhergehenden Ansprüche, wobei das Filterelement (22) drehbar um eine Drehachse (36) gelagert ist und die Filterungsanordnung (10) ferner eine Antriebsvorrichtung (38) zum Drehen des Filterelementes (22) umfasst.

7. Filterungsanordnung (10) nach Anspruch 1,
wobei die Abstreifvorrichtung (40) eine Bürstenanordnung mit mindestens einer Bürste ist.

8. Filterungsanordnung (10) nach einem der vorhergehenden Ansprüche, wobei die Reinigungsvorrichtung (30) wenigstens eine der abgaseinlassseitigen Filterfläche (24) gegenüberliegend angeordnete und zum Aufsprühen einer Flüssigkeit auf diese Filterfläche eingerichtete Sprühvorrichtung (56) umfasst, wobei die Flüssigkeit an der abgaseinlassseitigen Filterfläche (24) anhaftende Rußpartikel (26) oder dergleichen chemisch entfernen oder lockern kann.

9. Filterungsanordnung (10) nach Anspruch 8,
wobei die Flüssigkeit der Sprühvorrichtung (56) eine bei einer Temperatur kleiner als die Entzündungstemperatur von Rußpartikeln (26), insbesondere bei einer Temperatur kleiner 400°C, entzündlicher Stoff ist.

10. Filterungsanordnung nach einem der vorhergehenden Ansprüche, umfassend eine Steuereinrichtung zur Aktivierung der Reinigungsvorrichtung (30),
wobei die Steuereinrichtung dazu eingerichtet ist, die Reinigungsvorrichtung (30) jeweils nach vorbestimmten Zeitabständen und/oder in Abhängigkeit vom Verschmutzungsgrad des Filterelementes (22) zu aktivieren.

11. Abgasanlage (12) für eine Feuerstätte, insbesondere Festbrennstoff-Feuerstätte, mit einer in einem Abgasweg (42) integrierte Filterungsanordnung (10) nach einem der vorhergehenden Ansprüche.

12. Abgasanlage (12) nach Anspruch 11,
wobei der Filterungsanordnung (10) ein elektrostatisches Feinstaubfilter (48) vorgeschaltet ist.

## Claims

1. Filtering assembly (10) for an exhaust system (12) of a furnace, more particularly a solid-fuel furnace, comprising a housing (16) which is to be integrated or is integrated in the exhaust system (12) and has at least one exhaust inlet (18) and at least one exhaust outlet (20), a filter element (22) which is arranged in the housing (16) between the at least one exhaust inlet (18) and the at least one exhaust outlet (20) and comprises a filtering surface (24) on the exhaust-inlet side, which surface is designed to filter out soot particles (26) or the like from the exhaust gas which flows through the housing (16) during normal operation in the exhaust system (12), and a cleaning device (30), in or on the housing (16), which is assigned to the filter element (22) and can be activated in order to automatically remove the soot particles (26) or the like adhering to the filtering surface (24), which is on the exhaust-inlet side, **characterised in that** the cleaning device (30) comprises a stripping device (40) which is designed to act on the filtering surface (24), on the exhaust-inlet side, of the filter element (22) in order to strip off soot particles (26) or the like therefrom.

2. Filtration assembly (10) according to claim 1, wherein the housing (16) further comprises a suction channel (32) and a suction device which can be connected thereto.

3. Filtration assembly (10) according to claim 2, wherein the filter element (22) is substantially cylindrical.

4. Filtration assembly (10) according to claim 3, wherein the filter element (22) comprises a cylindrical perforated filter casing (34) which contains filtering material.

5. Filtration assembly (10) according to any of the preceding claims, wherein the filter element (22) comprises, as filtering materials, stainless steel shavings, stainless steel wool, porous ceramics, more particularly ceramic foam, granulate materials, more particularly expanded clay granules, and/or pumice stone.

6. Filtration assembly (10) according to any of the preceding claims, wherein the filter element (22) is rotatably mounted about an axis of rotation (36), and the filtration assembly (10) further comprises a drive device (38) for rotating the filter element (22).

7. Filtration assembly (10) according to claim 1, wherein the stripping device (40) is a brush assembly comprising at least one brush.

8. Filtration assembly (10) according to any of the preceding claims, wherein the cleaning device (30) comprises at least one spraying device (56) which is arranged opposite the filtering surface (24), which is on the exhaust-inlet side, and is configured to spray a fluid onto said filtering surface, wherein the fluid can chemically remove or loosen soot particles (26) or the like adhering to the filtering surface (24) on the exhaust-inlet side.

9. Filtration assembly (10) according to claim 8, wherein the fluid of the spraying device (56) is a substance which is flammable at a temperature which is lower than the ignition temperature of soot particles (26), more particularly at a temperature of less than 400°C.

10. Filtration assembly according to any of the preceding claims, comprising a control means for activating the cleaning device (30), wherein the control means is configured to activate the cleaning device (30) in each case according to predetermined intervals and/or according to the degree of soiling of the filter element (22).

11. Exhaust system (12) for a furnace, more particularly a solid-fuel furnace, comprising a filtration assembly (10) according to any of the preceding claims which is integrated in a flue (42).

12. Exhaust system (12) according to claim 11, wherein an electrostatic fine particulate air filter (48) is connected upstream of the filtration assembly (10).

## Revendications

1. Dispositif de filtration (10) pour un système d'échappement (12) d'un foyer, en particulier un foyer de combustible solide, comprenant :
un boîtier (16) intégré ou à intégrer dans le système d'échappement (12) avec au moins une entrée de gaz d'échappement (18) et au moins une sortie de gaz d'échappement (20) ;
un élément filtre (22) qui est agencé dans le boîtier (16) entre l'au moins une entrée de gaz d'échappement (18) et l'au moins une sortie de gaz d'échappement (20) et
présente une surface de filtre (24) côté entrée de gaz d'échappement qui est adaptée pour filtrer des particules de suie (26) ou similaires des gaz d'échappement qui traversent le boîtier (16) en fonctionnement conforme aux dispositions dans le système d'échappement (12), et un dispositif de nettoyage (30) associé à l'élément-filtre (22) dans ou sur le boîtier (16) et qui peut être activé afin de retirer automatiquement les particules de suie (26) ou similaire adhérant sur la surface de filtre (24) côté entrée de gaz d'échappement,
**caractérisé en ce que** le dispositif de nettoyage (30) comporte un dispositif de raclage (40) qui est agencé de façon à solliciter la surface de filtre (24) côté entrée de gaz d'échappement de l'élément filtre (22) afin de racler des particules de suie (26) ou similaire de celle-ci.

2. Dispositif de filtration (10) selon la revendication 1,
dans lequel le boîtier (16) comporte en outre un canal d'aspiration (32) et un dispositif d'aspiration pouvant être raccordé à celui-ci.

3. Dispositif de filtration (10) selon la revendication 2,
dans lequel l'élément filtre (22) est sensiblement cylindrique.

4. Dispositif de filtration (10) selon la revendication 3,
dans lequel l'élément filtre (22) présente une enveloppe de filtre (34) cylindrique perforée qui contient un matériau filtrant.

5. Dispositif de filtration (10) selon l'une quelconque des revendications précédentes, dans lequel l'élément filtre (22) comprend comme matériaux filtrants des copeaux d'acier inoxydable, de la laine d'acier inoxydable, de la céramique poreuse, en particulier de la céramique expansée, des granulés, en particulier du granulat d'argile expansé et/ou de la pierre ponce.

6. Dispositif de filtration (10) selon l'une quelconque des revendications précédentes, dans lequel l'élément filtre (22) est monté mobile en rotation autour d'un axe de rotation (36) et le dispositif de filtration (10) comporte en outre un dispositif d'entraînement (38) pour la rotation de l'élément filtre (22).

7. Dispositif de filtration (10) selon la revendication 1,
dans lequel le dispositif de raclage (40) est un dispositif de brosse avec au moins une brosse.

8. Dispositif de filtration (10) selon l'une quelconque des revendications précédentes, dans lequel le dispositif de nettoyage (30) comprend au moins un dispositif de pulvérisation (56) agencé en regard de la surface de filtre (24) côté entrée de gaz d'échappement et prévu pour la pulvérisation d'un liquide sur cette surface de filtre, le liquide pouvant retirer ou désagréger chimiquement des particules de suie (26) ou similaire adhérant sur la surface de filtre (24) côté entrée de gaz d'échappement.

9. Dispositif de filtration (10) selon la revendication 8,
dans lequel le liquide du dispositif de pulvérisation (56) est une substance inflammable à une température inférieure à la température d'inflammation des particules de suie (26), en particulier à une température inférieure à 400 °C.

10. Dispositif de filtration selon l'une quelconque des revendications précédentes, comprenant un dispositif de commande pour l'activation du dispositif de nettoyage (30);
le dispositif de commande étant adapté pour activer le dispositif de nettoyage (30) respectivement selon des intervalles de temps prédéterminés et/ou en fonction du degré d'encrassement de l'élément filtre (22).

11. Système d'échappement (12) pour un foyer, en particulier un foyer de combustible solide avec un dispositif de filtration (10) selon l'une quelconque des revendications précédentes intégré dans une voie de gaz d'échappement (42).

12. Installation de gaz d'échappement (12) selon la revendication 1 l,
dans laquelle un filtre à poussière fine électrostatique (48) est monté en amont du dispositif de filtration (10).
